# EUROPÄISCHE PATENTANMELDUNG

(11) **EP 1 803 679 A2**
(43) Veröffentlichungstag der Anmeldung: **04.07.2007**
(21) Anmeldenummer: 06026664.0
(22) Anmeldetag: 22.12.2006
(51) Int. Cl.: B66F 9/075, B66F 9/14

(54) **Verfahren und Anordnung zum Wenden von Paletten**

(30) Priorität: 03.01.2006 DE 102006000654
(71) Anmelder: Kaup GmbH & Co. KG Gesellschaft für Maschinenbau, 63741 Aschaffenburg (DE)
(72) Erfinder: Kaup, Otmar, 63741 Aschaffenburg (DE)
(74) Vertreter: Zapfe, Hans

(57) **Zusammenfassung**

Die Erfindung betrifft ein Verfahren und eine Anordnung zum Wenden von Paletten (12) mit darauf gelagertem Lagergut (13) unter Verwendung eines Hubstaplers (1), wobei jeweils eine Palette (12) mittels des Hubstaplers (1) innerhalb eines Lagerregals angehoben, aus diesem heraus bewegt und nach einer Drehung in eine entgegengesetzte Richtung wieder im Lagerregal abgesetzt wird. Zur Lösung der Aufgabe, auch in grossen Höhen gelagerte Lasten in relativ geringem Abstand von herkömmlich ausgerüsteten Hubstaplern (1) aufzunehmen und ohne Belastung des Hubstaplers (1) zu wenden und in grossen Höhen wieder abzusetzen, ohne dass zusätzliche schwere und kostenträchtige Vorbauten hergestellt und angebaut werden müssen, wird erfindungsgemäss die Drehung der Palette (12) durch eine kräftefreie Wirkverbindung von Bewegungen des Hubstaplers (1) und eines motorisch angetriebenen Drehständers (10) herbeigeführt, der auf einem Flur (11) eines Lagerbereichs abgestellt ist. Alternativ wird die Palette (12) mittels des Hubstaplers (1) auf einem den Hubstapler nicht belastenden Drehständer (10) abgestellt, durch eine Signalübertragung als Wirkverbindung auf dem Drehständer (10) in die entgegengesetzte Richtung gedreht und nach dieser Drehung mittels des Hubstaplers wieder auf das Lagerregal ausgerichtet und auf diesem abgestellt.

## Beschreibung

Die Erfindung betrifft ein Verfahren zum Wenden von Paletten mit darauf gelagertem Lagergut unter Verwendung eines Hubstaplers, wobei jeweils eine Palette mittels des Hubstaplers innerhalb des Lagerregals angehoben, aus diesem heraus bewegt und nach einer Drehung in eine entgegengesetzte Richtung wieder im Lagerregal abgesetzt wird.

Solche Hubstapler gehören zur Gruppe der Flurförderzeuge, die dazu vorgesehen sind, Transportgut, insbesondere Paletten auf einer Flur wie einem Hallenboden oder einer befahrbaren Fläche im Freien zu bewegen, auf- und abzuladen und umzusetzen.

Aus Mangel an Stellfläche wird quaderförmiges Lagergut, z.B. Kartons oder Kästchen mit Inhalt, auf Paletten zunehmend in den Etagen von Hochregallagern gelagert. Dabei wird das Lagergut nach und nach von der gut zugänglichen Vorderseite entnommen, wodurch sich abnehmende Restbestände von Lagergut mit einem treppenförmigen Anstieg von der Vorderseite zur Rückseite ergeben. Dadurch wird die Entnahme zunehmend erschwert. Aufgrund amtlicher Vorschriften und den Einwändungen und Kontrollen von Berufsgenossenschaften ist es dem Personal, sogenannten Kommissionierern, aus Gesundheitsgründen nicht erlaubt, ein manuelles Umsetzen des Lagerguts in "luftiger Höhe" vorzunehmen.

In den nachstehend beschriebenen Fällen wird die Last, z.B. eine ganz oder teilweise beladene Palette von einem speziell dafür ausgerüsteten Hubstapler bzw. Flurförderzeug, im Englischen auch "Lift Truck" genannt, an einem Ausleger auf- und abwärts bewegt und verschwenkt bzw. gedreht. Dadurch wird die Kopflastigkeit zu Ungunsten der Nutzlast erheblich verringert. Hinderlich ist bei solchen Manipulationen auch die sogenannte Arbeitsgangbreite, d.h. der lichte Abstand zwischen zwei Regalwänden, der beispielhaft zwischen 1420 und 1670 mm betragen kann.

Es ist bereits bekannt, an einem Hubmast eines Hub- bzw. Gabelstaplers einen Vorbau anzubringen, der einen mittels eines Hubschlittens vertikal verfahrbaren Querrahmen und einen daran horizontal verfahrbaren Zwischenträger mit einem Ausleger für einen Gabelträger besitzt, der um eine senkrechte Achse um 180 Grad verschwenkbar ist und an dem wiederum zwei Lastgabeln befestigt sind. Der Ausleger trägt an seinem Ende ein Lager, das über einen Lagerbock mit dem Gabelträger verbunden ist. Die Summe der Längen von Ausleger und Lagerbock müssen dabei deutlich grösser sein als die Hälfte der maximalen Breite des Transportguts bzw. der Palette für das Lagergut. Dadurch wird der Hubstapler mit Hebelwirkung kopflastig, was die Nutzlast entsprechend verringert. Das bekannte System ist erheblich kostenaufwändig. Ferner macht das komplizierte Wendemanöver aus staplerseitig zusammengesetzten Bewegungen einen Eingriff in die Steuerung des Staplers erforderlich, was aus Haftungsgründen von den Stapler-Herstellern regelmässig abgelehnt wird. Derartige Fahrzeuge, die auch als Schmalgang-Hochregalstapler oder Kommisionierstapler bezeichnet werden, dienen zum Beschicken und Entladen von Hochregalen und besitzen Hubhöhen bis zu ca. 10 Metern.

Es ist ferner bereits bekannt, an einem Hubmast eines Staplers einen ersten oberen Hubschlitten mit einem nicht schwenkbaren ersten Ausleger anzubringen, an dem ein drehbarer torbogenförmiger Drehrahmen, aufgehängt ist, der an seinen unteren Enden zwei Haltewinkel für die Last, z.B. eine beladene Palette, besitzt. Unterhalb des ersten Auslegers befindet sich ein zweiter Hubschlitten mit horizontalen Führungsschienen für einen in Querrichtung verfahrbaren, aber nicht schwenkbaren Gabelträger mit zwei Gabeln, die in Querrichtung verfahrbar zwischen den Haltewinkeln angeordnet sind. Eine Drehung des Drehrahmens ist nur dann möglich, wenn die Gabeln aus dem Drehbereich des Drehrahmens entfernt sind. Bei diesem System wird die Kopflastigkeit zu Ungunsten der Nutzlast noch weit stärker vergrössert, und ausserdem beträgt die maximale Hubhöhe nur etwa 1,4 Meter. Ein zusätzliches Problem entsteht durch die vergrösserte Arbeitsbreite, wodurch der Einsatz in schmalen Regalgängen be- oder verhindert wird. Mit diesem bekannten Gerät kann nur eine Gangseite bedient werden. Für die Bedienung der anderen Gangseite muss es aus dem Gang heraus gefahren, gewendet und rückwärts wieder in den Gang eingefahren werden. Dieses bekannte System ist schon im Einzelfall erheblich kostenaufwändig. Zusätzlich aber ist der Aufwand wegen zahlreicher Sonderkonstruktionen für unterschiedliche Staplerfahrzeuge beträchtlich.

Durch das DE 298 15 729 U1 ist es bekannt, ein Strassenfahrzeug mit einer Ladevorrichtung zum Be- und Entladen zu versehen, durch die eine Last mittels sich kreuzender Schienenführungen auf beiden Seiten des Fahrzeugs in drei Raumkoordinaten und um eine senkrechte Achse bewegt werden kann. Die maximale Hubhöhe einer Lastgabel ist jedoch durch die Raumlage der obersten Schienenführung begrenzt, die knapp unterhalb der Abdeckung der Ladefläche angeordnet ist. Die Lastgabel ist unabhängig vom Fahrzeug nicht verwendbar, das Fahrzeug ist in eine enge Gasse zwischen Lagerregalen nicht einfahrbar, und die oberen Etagen der Lagerregale sind durch die Lastgabel nicht erreichbar.

Durch das DE 202 20 608 U1 ist eine Vorrichtung zur mobilen Hochleistungssortierung von Paletten bekannt, die als Einheit verfahrbar ist. Unbeladene Palettenstapel werden mittels eines Gabelstaplers zugeführt, in der Vorrichtung entstapelt und umgestapelt. Die Vorrichtung selbst besitzt keine Wende- oder Drehvorrichtungen, vielmehr sind solche ausdrücklich ausgeschlossen (Seite 4/11, Ziffer 6). Eine Drehung eines Palettenstapels könnte allenfalls ausserhalb der Vorrichtung mittels des Gabelstaplers durchgeführt werden, der den Stapel absetzt, um ihn herum fährt und ihn von der anderen Seite wieder aufnimmt. Hierfür ist aber kein Anlass ersichtlich.

Durch das DE 201 22 136 U1 und die entsprechenden DE 101 63 766 A1 und WO 03/055786 A1 ist es bei Vorrichtungen zum Wenden von Ladeeinheiten o. dgl., insbesondere von teilentladenen Paletten bekannt, diese Paletten unmittelbar vor ihrem Standort in einem Lagerregal um 180 Grad zu wenden und in der neuen Stellung wieder in den bisherigen Standort einzufahren, ohne das hierfür erforderliche Fahrzeug selbst wenden zu müssen. Dieses besteht aus einem Fahrgestell, dessen Antrieb nicht dargestellt ist. Dieses Fahrgestell besitzt einen oder zwei Ausleger, an dem bzw. denen Gabeln heb- und senkbar sowie drehbar angeordnet sind. Durch den notwendigerweise grossen Schwenkradius hat der mindestens eine Ausleger eine grosse Länge, so dass die gesamte Anordnung im beladenen Zustand erheblich kopflastig ist. Auch kann die Anordnung ohne Abbau und Wiederanbau nicht von anderen Fahrzeugen benutzt und bedient werden.

Durch die DE 33 14 495 A1 ist es bekannt, in einer Fahrstrasse zwischen zwei Hochregalen Schienen anzuordnen, auf denen ein Mast in Längsrichtung der Fahrstrasse verfahrbar ist. Durch den Mast ist in vertikaler Richtung ein Ausleger geführt, an dem über eine Drehscheibe eine Greifeinrichtung geführt ist, die als Gabel zum Unterfahren der Palette ausgeführt sein kann. Diese Ausführungsform muss jedoch in jeder Fahrstrasse wiederholt werden, was zu erheblichen Aufwendungen führt und räumlich das Einfahren üblicher Gabelstapler verhindert.

Durch die DE 21 53 547 A1 ist es bekannt, einen Gabelstapler mit einer lichtoptischen Positionierhilfe auszustatten, um dem Fahrer die Orientierung beim Einfahren der Gabel in öffnungen von Hochregalen und unter die Paletten zu erleichtern. Das Dokument setzt sich jedoch nicht mit dem Problem auseinander, Paletten aus ihren Lagerstellen zu entfernen, auf einem externen Drehtisch um 180 Grad zu wenden und wieder in die Lagerstelle zurück zu bringen. lnsbesondere wird ein Datenaustausch mit dem Drehtisch nicht angesprochen.

Durch die CH 658 233 A5 ist es bekannt, einen drehbaren, kreiszylindrischen Zwischenspeicher für teilweise bearbeitete Kleinteile mit einem Gabelstapler zu beschicken und zu entladen. Für die Entnahme, das Wenden und die Rückführungen von Paletten in lineare Hochlagerregale gibt dieses Dokument keine Anregungen.

Der Erfindung liegt demgegenüber die Aufgabe zugrunde, ein Verfahren der eingangs beschriebenen Gattung anzugeben, durch das auch in grossen Höhen gelagerte Lasten in relativ geringem Abstand von herkömmlich ausgerüsteten Hubstaplern aufgenommen und ohne Belastung der Hubstapler gewendet und in grossen Höhen wieder abgesetzt werden können, ohne dass zusätzliche schwere und kostenträchtige Vorbauten hergestellt und angebaut werden müssen.

Die Lösung dieser Aufgabe erfolgt erfindungsgemäss dadurch, dass die Drehung der Palette durch eine kräftefreie Wirkverbindung von Bewegungen des Hubstaplers und eines motorisch angetriebenen Drehständers herbeigeführt wird, der auf einer Flur eines Lagerbereichs abgestellt ist.

Die Lösung dieser Aufgabe erfolgt weiterhin erfindungsgemäss dadurch, dass die Palette mittels des Hubstaplers auf einem den Hubstapler nicht belastenden Drehständer abgestellt, durch eine Signalübertragung auf dem Drehständer in die entgegengesetzte Richtung gedreht und nach dieser Drehung mittels des Hubstaplers wieder auf das Lagerregal ausgerichtet und wieder auf diesem abgestellt wird.

Durch die erfindungsgemässen Lösungen wird die gestellte Aufgabe in vollem Umfange gelöst. Insbesondere werden die Lasten auch in grossen Höhen in relativ geringem Abstand von herkömmlich ausgerüsteten Hubstaplern aufgenommen, ohne Belastung der Hubstapler gewendet und danach auch in grossen Höhen wieder abgesetzt. Zusätzliche schwere und kostenträchtige Vorbauten werden nicht benötigt, wodurch die Nutzlast beträchtlich erhöht wird. Zug-, Biegungs- und Gewichtseinflüsse auf Fahrzeugteile werden durch Druck auf einen bodenständigen Drehständer ersetzt, der auch in engen Regalgassen aufgestellt und in kurzen Taktfolgen auch von anderen Hubstaplern herkömmlicher und unterschiedlicher Bauart benutzt werden kann. Weiterhin ermöglicht ein einziger Hubschlitten die volle Nutzung der Masthöhe, wodurch der Einsatzbereich auch auf Regalwände grösserer Höhe ausgedehnt werden kann. Auch ein Herausfahren des Hubstaplers aus engen Regalgängen, ein Wenden und ein rückwärtiges Wiedereinfahren in die Regalgänge wird dadurch überflüssig.

Der Kern der Erfindung besteht gewissermassen darin, das Transport- bzw. Lagergut ohne Krafteinwirkung auf den Hubstapler zu wenden und hierfür übliche Hubstapler ohne Umrüstung mit schweren Vorbauten einsetzen zu können. Soweit in den Ausführungen der Ausdruck "kräftefreie Wirkverbindung" verwendet wird, ist darunter jede kräftefreie Koordination" zu verstehen, sei es auf induktiver, kapazitiver und/oder optischer Basis oder durch Sender/Empfänger und/oder Schleppkabel.

Es ist im Zuge weiterer Ausgestaltungen des Verfahrens besonders vorteilhaft, wenn - entweder einzeln, oder in Kombination - :
* die Signalübertragung zum Drehständer durch einen von einer Bedienungsperson betätigten Sender und einen dem Drehständer zugeordneten Empfänger bewirkt wird,
* die Signalübertragung vom Hubstapler aus bewirkt wird.
* die Signalübertragung durch eine Funkverbindung bewirkt wird, und/oder, wenn
* die Wirkverbindung bzw. Signalübertragung durch Sensoren bewirkt wird, die an einer Wendeplatte des Drehständers angeordnet sind und die durch Gabelelemente des Hubstaplers aktiviert werden.

Die Erfindung betrifft auch eine Anordnung zum Wenden von Paletten mit darauf gelagertem Lagergut, bestehend aus einem Hubstapler und einer Drehvorrichtung, durch die jeweils eine Palette ausserhalb des Lagerregals in eine entgegengesetzte Richtung verdrehbar ist.

Zur Lösung der gleichen Aufgabe und zur Erzielung der gleichen Vorteile ist eine solche Anordnung dadurch gekennzeichnet, dass die Drehvorrichtung als ein auf der Flur für das Bewegen des Hubstaplers abstellbarer Drehständer ausgebildet ist, der eine Wendeplatte besitzt, die durch eine kräftefreie Wirkverbindung von Bewegungen des Hubstaplers und des motorisch angetriebenen Drehständers in eine entgegengesetzte Richtung verdrehbar ist.

Zur Lösung der gleichen Aufgabe und zur Erzielung der gleichen Vorteile ist eine weitere Anordnung dadurch gekennzeichnet, dass zum Absetzen und Wenden der Palette ein den Hubstapler nicht belastender Drehständer mit einer Wendeplatte vorgesehen ist, deren Drehbewegung in eine entgegengesetzte Richtung durch eine Signalübertragung zwischen einem Sender und einem dem Drehständer zugeordneten Empfänger herbeiführbar ist.

Es ist im Zuge weiterer Ausgestaltungen der Anordnung besonders vorteilhaft, wenn - entweder einzeln, oder in Kombination - :
* die Signalübertragung durch einen von einer Bedienungsperson betätigbaren Sender und einen dem Drehständer zugeordneten Empfänger ausgebildet ist,
* die Signalübertragung eine Funkübertragung mit dem Sender und dem Empfänger ist,
* der Sender der Signalübertragung dem Hubstapler zugeordnet ist,
* für die Wirkverbindung bzw. Signalübertragung Sensoren an der Wendeplatte des Drehständers angeordnet sind, die durch die Gabelelemente des Hubstaplers aktivierbar sind.
* der Drehständer eine Grundplatte für das Abstellen auf der Flur besitzt, über der mittels Ständern eine Traverse angeordnet ist, die einen Drehkranz für eine Wendeplatte trägt,
* die Grundplatte mit Abstandshaltern versehen und mittels eines Hubstaplers von der Flur anhebbar und umsetzbar ist,
* der Drehständer Fahrrollen und eine mechanische Kupplungseinrichtung für das Anhängen an einen Hubstapler aufweist,
* der Hubstapler zur Signalübertragung über ein Kabel mit dem Drehständer verbunden ist,
* auf der Grundplatte ein Antriebsmotor angeordnet ist, der über ein Ritzel mit einer Innenverzahnung des Drehkranzes verbunden ist,
* der Antriebsmotor für eine maximale Betriebsspannung von 48 Volt, vorzugsweise von 24 Volt ausgelegt und an mindestens einen Stromspeicher anschliessbar ist,
* das Kabel zusätzliche Adern für die Aufladung des mindestens einen Stromspeichers vom Hubstapler aus aufweist,
* der Antriebsmotor ein Antriebsteil einer Hand-Bohrmaschine ist,
* das Untersetzungsverhältnis zwischen dem Ritzel und dem Drehkranz zwischen 3:1 und 10:1 ausgelegt ist, und/oder, wenn
* die Wendeplatte für das Absetzen einer Euro-Palette mit den Abmessungen von 800 mm x 1200 mm ausgelegt ist.

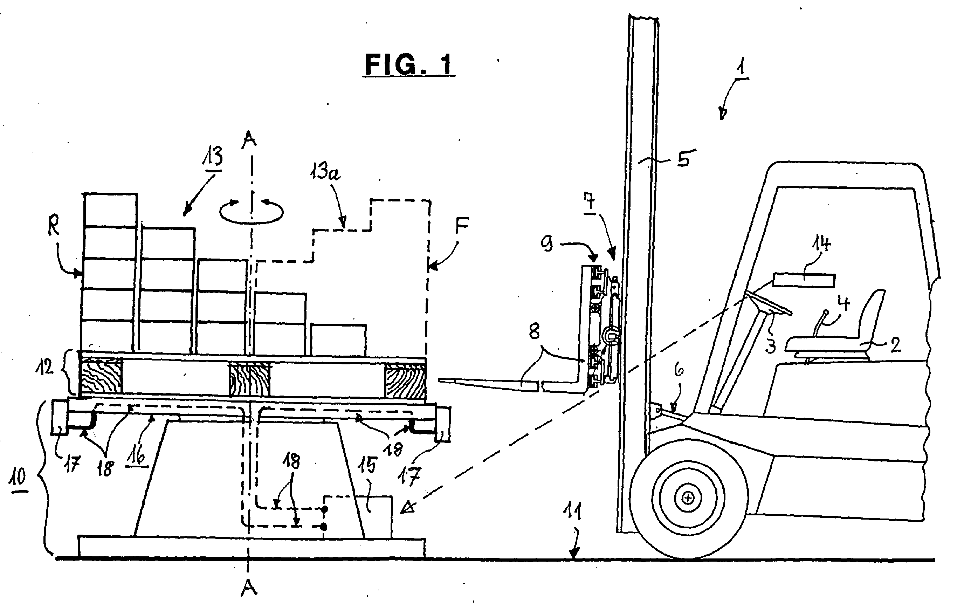

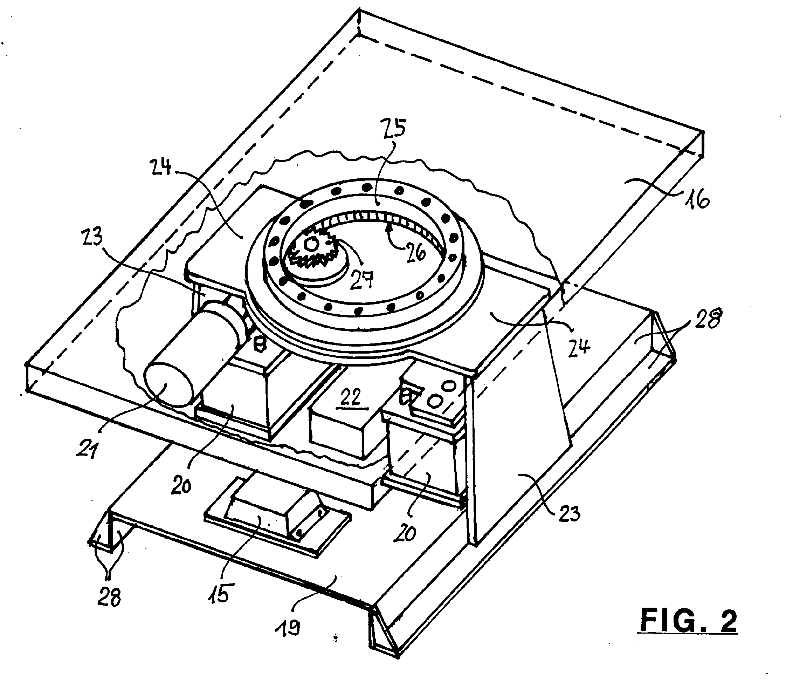

Ausführungsbeispiele, weitere Ausgestaltungen und weitere Varanten des Erfindungsgegenstandes und deren Wirkungsweisen und weitere Vorteile werden nachfolgend anhand der Figuren 1 und 2 näher erläutert.

Es zeigen:
- Figur 1: eine Seitenansicht eines Hubstaplers und eines Drehständers mit teilweise beladener Palette sowie verschiedene Steuer- bzw. Wirkverbindungen zwischen Hubstapler und Drehständer, und
- Figur 2: eine teilweise aufgebrochene perspektivische Darstellung des Drehständers.

In Figur 1 ist die Vorderseite eines herkömmlichen Hubstaplers 1 gezeigt, dessen lenkbare Hinterräder ausserhalb des Bildfeldes liegen. Solche Hubstapler werden im Englischen auch als "Lift Truck" bezeichnet. Gezeigt sind ein überdachter Fahrersitz 2, ein Steuerrad 3, ein Schalthebel 4 und der untere Teil eines aus parallelen Profilen bestehenden Hubrahmens 5, dessen Stellung über einen Antrieb und eine Gelenkstange 6 verstellbar ist. An dem Hubrahmen 5 ist vertikal verfahrbar ein Hubschlitten 7 geführt, an dem umsetzbar zwei Gabelelemente 8 aufgehängt sind. über eine Seitenschiebereinrichtung 9 kann ein Zwischenrahmen, an dem umsetzbare Gabelelemente 8 aufgehängt sind, quer zur Fahrtrichtung begrenzt verschoben werden. Diese Seitenschiebereinrichtung 9 ist jedoch nicht unbedingt erforderlich.

ln Fahrtrichtung vor dem Hubstapler 1 ist ein Drehständer 10 auf der Flur 11 abgestellt, auf der der Hubstapler 1 verfahrbar ist. Auf dem Drehständer 10 ist eine Palette 12 abgesetzt, die beispielhaft eine Euro-Palette ist und die Abmessungen von 800 mm mal 1200 mm besitzt. Auf der Palette 12 befinden sich Stapel von quaderförmigem Lagergut 13, von denen etwa die Hälfte bereits von der Vorderseite "F" her aus dem Lagerregal entladen worden ist. Dadurch ergibt sich die gezeigte Stufenanordnung in Form einer zur Rückseite "R" hinten ansteigenden Treppe. Durch eine Drehung der Palette 12 mittels des Drehständers 10 um 180 Grad ± einer Toleranz um die senkrechte Achse A-A wird die Palette in eine Stellung gebracht, in der die Rückseite "R" zur Vorderseite "F" wird und der Stapel des Lagerguts 13 den gestrichelten Verlauf 13a hat. Die Vorderseite "F" und die Rückseite "R" sind auf die Fahrtrichtung des Hubstaplers 1 bezogen.

Eine Wirkverbindung zwischen dem Hubstapler 1 und dem Drehständer 10 erfolgt beispielhaft durch einen programmierbaren Sender 14, der am Hubstapler 1 befestigt sein kann oder den eine Bedienungsperson in der Hand halten kann. Diese Bedienungsperson kann der Fahrer sein oder eine zusätzliche Bedienungsperson, die den Sender 14 in der Hand halten und den Beladungs-, Rotations- und Entladungsvorgang aus nächster Nähe beobachten und steuern kann. Die Signale des Senders 14 wirken auf einen Empfänger 15 ein, der dem Drehständer 10 zugeordnet ist. Dieser besitzt eine Wendeplatte 16, die um die Achse A-A drehbar ist.

Ein weiteres Beispiel einer Wirkverbindung zwischen dem Hubstapler 1 und dem Drehständer 10 besteht aus Sensoren 17, die auf die Enden der Gabelelemente 8 ansprechen und von denen jeweils mindestens einer auf der Vorderseite "F" und der Rückseite "R" der Wendeplatte 16 angeordnet ist. Die Sensoren 17 gehören zur Gruppe der Näherungsschalter, die auf induktiver, kapazitiver und/oder optischer Basis arbeiten und deren Wirkung sich über eine Breite erstreckt, die dem Querabstand der Gabelelemente 8 entspricht. Die Sensoren 17 sind mit dem Empfänger 15 über Kabel 18 verbunden, die einen ausreichenden Drehwinkel erlauben und ggf. im Bereich der Achse A-A durch Schleifkontakte verbunden sind. Bei Verwendung induktiver Sensoren 17 sprechen diese auf das Metall der Gabelelemente 8 an. Geraten die Enden der Gabelelemente 8 in den Ansprechbereich der Sensoren 17, so wird oder bleibt der Drehständer 10 blockiert. Werden die Enden der Gabelelemente 8 aus dem Ansprechbereich der Sensoren 17 zurückgefahren, so wird der Drehständer 10 über den Empfänger 15 aktiviert und führt einen Wendevorgang der Wendeplatte 16 mit der Palette 12 aus. Fehlpositionierungen sind auf diese Weise ausgeschlossen.

Die Figur 2, in der die Sensoren 17 weggelassen sind, zeigt nun eine teilweise aufgebrochene perspektivische Darstellung des Drehständers 10. Auf einer Grundplatte 19 sind der Empfänger 15, zwei Stromspeicher 20, ein Antriebsmotor 21 und eine Steueranordnung 22 angeordnet, die die vom Sender 14 oder von den Sensoren 17 (Figur 1) über den Empfänger 15 erhaltenen Befehle in Stellsignale für den Antriebsmotor 21 umsetzt. Die Verdrahtungen sind der Einfachheit halber nicht dargestellt. An die Stelle einer Funksteuerung kann auch eine Wirkverbindung durch ein Schleppkabel treten.

Von der Grundplatte 19, die im wesentlichen die Abmessungen der Palette 12 hat (Fig. 1), ragen zwei seitliche Ständer 23 nach oben, die eine horizontale Traverse 24 tragen. Auf dieser Traverse 24 ist mittels eines nicht gezeigten Wälzlagers ein Drehkranz 25 gelagert, der eine Innenverzahnung 26 trägt. In diese Innenverzahnung 26 greift ein Ritzel 27 ein, das über ein nicht gezeigtes Untersetzungsgetriebe, beispielsweise ein Schneckengetriebe, von dem Antriebsmotor 21 angetrieben wird. Auf diesen Drehkranz 25 ist die Wendeplatte 16 aufgeschraubt. Die Grundplatte 19 besitzt zwei seitliche Abstandshalter 28, durch die zwischen der Flur 11 und der Grundplatte 19 ein Freiraum für das Unterfahren mit Tragelementen, z.B. mit den Gabelelementen 8 (Fig. 1), zum Umsetzten des Drehständers 10 gebildet wird. Es ist auch möglich, die Grundplatte 19 mit nicht gezeigten Fahrrollen und einer Gabel oder Deichsel zu versehen, die an den Hubstapler 1 oder einen anderen Hubstapler ankoppelbar ist und mit diesem eine Kupplungseinrichtung bildet.

Das Zusammenwirken der Gegenstände nach den Figuren 1 und 2 wird beispielhaft wie folgt beschrieben: Mittels des Hubstaplers 1, der mit seinen Gabelelementen 8 horizontal in eine Palette 12 in einer ausgewählten Etage einer Regalwand eines Hochregallagers einfährt, wird diese Palette 12 angehoben und heraus bewegt. Nach einer Drehung des Hubstaplers 1 um 90 Grad ± Toleranzen wird diese Palette 12 in einer Stellung gemäss Figur 1 auf dem Drehständer 10 abgesetzt. Die Gabelelemente 8 werden jetzt um mindestens ihre horizontale Länge zurück gefahren, und mittels des Senders 14 wird ein Wendebefehl abgegeben, durch den die Wendeplatte 25 um 180 Grad ± Toleranzen gewendet wird, wodurch das Lagergut 13 in die gestrichelt dargestellte Position gebracht wird (Fig. 1). Danach werden die Gabelemente 8 wieder in die Palette 12 eingefahren, und die Palette 12 wird angehoben, mittels des Hubstaplers 1 um eine Vierteldrehung gewendet und in gewendeter Position wieder an der ursprünglichen Stelle in die Regalwand eingefahren und dort abgesetzt. Das Lagergut 13 ist jetzt wieder von der voll bestückten Seite her bis zur endgültigen Entleerung zugänglich. Ein analoger Funktionsablauf erfolgt auch durch die Wechselwirkung zwischen den Gabelelementen 8 und den Sensoren 17.

Für die Auslegungs- und Betriebsparameter hat sich folgendes als besonders geeignet erwiesen: Die Verwendung einer Handbohrmaschine mit einer Gleichspannung von 24 Volt und einer Leistung von 500 Watt als Antriebsmotor 21. Ein direkt angetriebenes Ritzel 27 mit einer Zähnezahl von 10 bis 20 und eine Innenverzahhung 26 des Drehkranzes 25 mit einer Zähnezahl zwischen 60 und 100, d.h. eine Untersetzung von 3:1 bis 10:1 zuzüglich der Untersetzung durch ein vorgeschaltetes Getriebe, z.B. durch das ggf. vorhandene Schneckengetriebe. Eine Einschaltdauer von 1,5 bis 5 Sekunden, vorzugsweise von 2,5 bis 3 Sekunden, für eine Drehung der Wendeplatte um 180 Grad bei einer Drehzahl von ca. 60/min.. Eine Pause von 20 bis 120 Sekunden bis zum Aufsetzen der nächsten Palette 12. Eine Kapazität der Stromspeicher 16 von mindestens 2 Ah. Damit lassen sich nahezu 200 Arbeitszyklen mit Hochfahren des Hubschlittens 7 in Höhen bis zu 14 Metern erreichen.

### Bezugszeichenliste:

- 1: Hubstapler
- 2: Fahrersitz
- 3: Steuerrad
- 4: Schalthebel
- 5: Hubrahmen
- 6: Gelenkstange
- 7: Hubschlitten
- 8: Gabelelemente
- 9: Seitenschiebereinrichtung
- 10: Drehständer
- 11: Flur
- 12: Palette
- 13: Lagergut
- 13a: gestrichelter Verlauf
- 14: Sender
- 15: Empfänger
- 16: Wendeplatte
- 17: Sensoren
- 18: Kabel
- 19: Grundplatte
- 20: Stromspeicher
- 21: Antriebsmotor
- 22: Steueranordnung
- 23: Ständer
- 24: Traverse
- 25: Drehkranz
- 26: Innenverzahnung
- 27: Ritzel
- 28: Abstandshalter

- A-A: Achse
- F: Vorderseite
- R: Rückseite

## Patentansprüche

1. Verfahren zum Wenden von Paletten (12) mit darauf gelagertem Lagergut (13) unter Verwendung eines Hubstaplers (1), wobei jeweils eine Palette (12) mittels des Hubstaplers (1) innerhalb des Lagerregals angehoben, aus diesem heraus bewegt und nach einer Drehung in eine entgegengesetzte Richtung wieder im Lagerregal abgesetzt wird, **dadurch gekennzeichnet, dass** die Drehung der Palette (12) durch eine kräftefreie Wirkverbindung von Bewegungen des Hubstaplers (1) und eines motorisch angetriebenen Drehständers (10) herbeigeführt wird, der auf einer Flur (11) eines Lagerbereichs abgestellt ist.

2. Verfahren zum Wenden von Paletten (12) mit darauf gelagertem Lagergut (13) unter Verwendung eines Hubstaplers (1), wobei jeweils eine Palette (12) mittels des Hubstaplers (1) innerhalb des Lagerregals angehoben, aus diesem heraus bewegt und nach einer Drehung in eine entgegengesetzte Richtung wieder im Lagerregal abgesetzt wird, **dadurch gekennzeichnet, dass** die Palette (12) mittels des Hubstaplers (1) auf einem den Hubstapler (1) nicht belastenden Drehständer (10) abgestellt, durch eine Signalübertragung auf dem Drehständer (10) in die entgegengesetzte Richtung gedreht und nach dieser Drehung mittels des Hubstaplers (1) wieder auf das Lagerregal ausgerichtet und wieder auf diesem abgestellt wird.

3. Verfahren nach Anspruch 2, **dadurch gekennzeichnet, dass** die Signalübertragung zum Drehständer (10) durch einen von einer Bedienungsperson betätigten Sender (14) und einen dem Drehständer (10) zugeordneten Empfänger (15) bewirkt wird.

4. Verfahren nach Anspruch 3, **dadurch gekennzeichnet, dass** die Signalübertragung vom Hubstapler (1) aus bewirkt wird.

5. Verfahren nach Anspruch 3, **dadurch gekennzeichnet, dass** die Signalübertragung durch eine Funkverbindung bewirkt wird. ,

6. Verfahren nach einem der Ansprüche 1 und 2, **dadurch gekennzeichnet, dass** die Wirkverbindung bzw. Signalübertragung durch Sensoren (17) bewirkt wird, die an einer Wendeplatte (16) des Drehständers (10) angeordnet sind und die durch Gabelelemente (8) des Hubstaplers (1) aktiviert werden.

7. Anordnung zum Wenden von Paletten (12) mit darauf gelagertem Lagergut (13), bestehend aus einem Hubstapler (1) und einer Drehvorrichtung, durch die jeweils eine Palette (12) ausserhalb des Lagerregals in eine entgegengesetzte Richtung verdrehbar ist, **dadurch gekennzeichnet, dass** die Drehvorrichtung als ein auf der Flur (11) für das Bewegen des Hubstaplers (1) abstellbarer Drehständer (10) ausgebildet ist, der eine Wendeplatte (16) besitzt, die durch eine kräftefreie Wirkverbindung von Bewegungen des Hubstaplers (1) und des motorisch angetriebenen Drehständers (10) in eine entgegengesetzte Richtung verdrehbar ist.

8. Anordnung zum Wenden von Paletten (12) mit darauf gelagertem Lagergut (13), bestehend aus einem Hubstapler (1) und einer Drehvorrichtung, durch die jeweils eine Palette (12) ausserhalb des Lagerregals in eine entgegengesetzte Richtung verdrehbar ist, **dadurch gekennzeichnet, dass** zum Absetzen und Wenden der Palette (12) ein den Hubstapler (1) nicht belastender Drehständer (10) mit einer Wendeplatte (16) vorgesehen ist, deren Drehbewegung in eine entgegengesetzte Richtung durch eine Signalübertragung zwischen einem Sender (14) und einem dem Drehständer (10) zugeordneten Empfänger (15) herbeiführbar ist.

9. Anordnung nach einem der Ansprüche 7 und 8, **dadurch gekennzeichnet, dass** die Signalübertragung durch einen von einer Bedienungsperson betätigbaren Sender (14) und einen dem Drehständer (10) zugeordneten Empfänger (15) ausgebildet ist.

10. Anordnung nach Anspruch 9, **dadurch gekennzeichnet, dass** die Signalübertragung eine Funkübertragung mit dem Sender (14) und dem Empfänger (15) ist.

11. Anordnung nach Anspruch 10, **dadurch gekennzeichnet, dass** der Sender (14) der Funkübertragung dem Hubstapler (1) zugeordnet ist.

12. Anordnung nach einem der Ansprüche 7 und 8, **dadurch gekennzeichnet, dass** für die Wirkverbindung bzw. Signalübertragung Sensoren (17) an der Wendeplatte (16) des Drehständers (10) angeordnet sind, die durch Gabelelemente (8) des Hubstaplers (1) aktivierbar sind.

13. Anordnung nach einem der Ansprüche 7 und 8, **dadurch gekennzeichnet, dass** der Drehständer (10) eine Grundplatte (19) für das Abstellen auf der Flur (11) besitzt, über der mittels Ständern (23) eine Traverse (24) angeordnet ist, die einen Drehkranz (25) für die Wendeplatte (16) trägt.

14. Anordnung nach Anspruch 13, **dadurch gekennzeichnet, dass** die Grundplatte (19) mit Abstandshaltern (28) versehen und mittels eines Hubstaplers (1) von der Flur (11) anhebbar und umsetzbar ist.

15. Anordnung nach einem der Ansprüche 7 und 8, **dadurch gekennzeichnet, dass** der Drehständer (10) Fahrrollen und eine Kupplungseinrichtung für das Ankoppeln an einen Hubstapler (1) aufweist.

16. Anordnung nach einem der Ansprüche 7 und 8, **dadurch gekennzeichnet, dass** der Hubstapler (1) zur Signalübertragung über ein Kabel mit dem Drehständer (10) verbunden ist.

17. Anordnung nach Anspruch 13, **dadurch gekennzeichnet, dass** auf der Grundplatte (19) ein Antriebsmotor (21) angeordnet ist, der über ein Ritzel (27) mit einer Innenverzahnung (26) des Drehkranzes (25) verbunden ist.

18. Anordnung nach Anspruch 17, **dadurch gekennzeichnet, dass** der Antriebsmotor (21) für eine maximale Betriebsspannung von 48 Volt, vorzugsweise von 24 Volt, ausgelegt und an mindestens einen Stromspeicher (20) anschliessbar ist.

19. Anordnung nach den Ansprüchen 16 und 18, **dadurch gekennzeichnet, dass** das Kabel zusätzliche Adern für die Aufladung des mindestens einen Stromspeichers (20) vom Hubstapler (1) aus aufweist.

20. Anordnung nach Anspruch 17, **dadurch gekennzeichnet, dass** der Antriebsmotor (21) ein Antriebsteil einer Hand-Bohrmaschine ist.

21. Anordnung nach Anspruch 17, **dadurch gekennzeichnet, dass** das Untersetzungsverhältnis zwischen dem Ritzel (27) und dem Drehkranz (25) zwischen 3:1 und 10:1 1 ausgelegt ist.

22. Anordnung nach einem der Ansprech 7 und 8, **dadurch gekennzeichnet, dass** die Wendeplatte (16) für das Absetzen einer Euro-Palette (12) mit den Abmessungen von 800 mm x 1200 mm ausgelegt ist.
* *****************
